# EUROPEAN PATENT APPLICATION

(11) **EP 4 560 364 A1**
(43) Date of publication of application: **28.05.2025**
(21) Application number: 23842863.5
(22) Date of filing: 10.07.2023
(51) Int. Cl.: G02B 1/14, B32B 27/18, G02B 1/111

(54) **HARD COAT FILM AND RESIN MOLDED ARTICLE USING SAME**

(30) Priority: 20.07.2022 JP 2022115485
(71) Applicant: MITSUBISHI GAS CHEMICAL COMPANY, INC., Chiyoda-ku Tokyo 100-8324 (JP)
(72) Inventor: KATO Ryota, Tokyo 100-8324 (JP); WAKAYAMA Shota, Tokyo 125-8601 (JP); NAKAMURA Hitomi, Tokyo 125-8601 (JP); SATO Yoshimasa, Tokorozawa-shi, Saitama 359-1164 (JP)
(74) Representative: Hoffmann Eitle
(86) International application number: PCT/JP2023/025387
(87) International publication number: WO 2024/018938

(57) **Abstract**

According to the present invention, it is possible to provide a hard coat film comprising: a base material layer which contains a thermoplastic resin; and a hard coat layer which is a cured coating film layer and is provided on at least one surface of the base material layer, wherein the hard coat layer contains a fluorine-containing leveling agent, the surface roughness of the surface of the hard coat layer is at most 10 nm, and the atomic concentration F(80°) of fluorine at an angle of 80° is at most 10 atomic% and the atomic concentration F(30°) of fluorine at an angle of 30° is at most 10 atomic%, as measured by angle resolved XPS.

## Description

### TECHNICAL FIELD

The present invention relates to a hard coat film comprising a base material layer and a hard coat layer, and to a resin molded article using the hard coat film. In particular, the present invention relates to a hard coat film with high surface hardness, excellent scratch resistance, and excellent leveling property (smoothness) and recoatability (reapplicability).

### BACKGROUND ART

In recent years, base material films, especially biaxially oriented polyester films, have been applied to various fields such as magnetic storage materials, packaging materials, electrical insulation materials, and optical display materials (e.g., anti-reflection films, films for touch panels) due to their excellent mechanical properties, dimensional stability, heat resistance, transparency, electrical insulation properties, etc.

Base material films such as those described above are increasingly being used as substitutes for glass products for weight reduction, processability, and the like. However, since the surface of these base material films has the disadvantage of being prone to scratches, they are generally provided with a hard coat layer or laminated with a film provided with a hard coat layer in order to impart scratch resistance. In addition, conventional glass products are also often laminated with a plastic film to prevent shattering in case of glass breakage, etc., and it is common to form a hard coat layer on its surface.

However, the conventional hard coat layers mentioned above are added with a leveling agent that significantly lowers the surface tension, such as silicone oil or fluorinated polyolefin (see patent literature 1), to improve the smoothness of the coating film after curing, and therefore the leveling property (smoothness) is sufficient, but the recoatability (reapplicability) is insufficient. In other words, when such a leveling agent that lowers the surface tension is contained in a hard coat layer, it lowers the surface energy of the hard coat layer, so that when a different composition layer, such as an antistatic layer, a high refractive index layer, or a low refractive index layer, is applied to the hard coat layer according to the intended use, application defects such as coating cissing, uneven coating, and coating streaks often occur, resulting in unsatisfactory recoatability.

### CITATION LIST

### Patent Literature

Patent literature 1: Japanese Unexamined Patent Application Publication No. 2002-267804

### SUMMARY OF THE INVENTION

### Problem To Be Solved By The Invention

The object of the present invention is to solve at least one of the aforementioned conventional problems. In particular, the object of the present invention is to provide a hard coat film with high surface hardness, excellent scratch resistance, and excellent leveling property (smoothness) and recoatability (reapplicability).

### Means To Solve The Problem

As a result of diligent study, the present inventors found that a hard coat film with excellent leveling property (smoothness) and recoatability (reapplicability) can be provided by adding a specific fluorine-containing leveling agent to the hard coat layer, thereby completing the present invention.

Thus, the present invention is as follows.
<1> A hard coat film comprising a base material layer containing a thermoplastic resin, and a hard coat layer, which is a cured coating film layer, on at least one side of the base material layer,
   wherein, the hard coat layer contains a fluorine-containing leveling agent, the surface roughness of the surface of the hard coat layer is 10 nm or less, the atomic concentration of fluorine F(80°) at an angle of 80° is 10 atomic% or less, and the atomic concentration of fluorine F(30°) at an angle of 30° is 10 atomic% or less, as measured by angle resolved XPS.
<2> The hard coat film according to <1> above, wherein the contact angle of propylene glycol monomethyl ether on the surface of the hard coat layer is 10° or less.
<3> The hard coat film according to <1> or <2> above, wherein the hard coat layer further comprises a photopolymerization initiator, a urethane (meth)acrylate, and solid inorganic particles.
<4> The hard coat film according to any one of <1> to <3> above, wherein the pencil hardness of the surface of the hard coat layer is H or harder.
<5> The hard coat film according to any one of <1> to <4> above, comprising a low refractive index layer, whose refractive index is lower than the refractive index of the hard coat layer by 0.05 or more, on the surface of the hard coat layer.
<6> The hard coat film according to <5> above, wherein the low refractive index layer contains a fluorine-containing leveling agent and a silicon-containing slip agent.
<7> The hard coat film according to any one of <1> to <6> above, which is used for an insert molding application.
<8> A resin molded article which is provided with the hard coat film according to any one of <1> to <7> above on its surface.

### EFFECTS OF THE INVENTION

The present invention can provide a hard coat film with high surface hardness, excellent scratch resistance, and excellent leveling property (smoothness) and recoatability (reapplicability). According to the present invention, the applicability of a functional material to be provided on the hard coat layer can be improved and thus it can be suitably used for applications which have a hard coat function and which are obtained by laminating multiple layers, such as anti-reflection films for displays.

### DESCRIPTION OF EMBODIMENTS

Hereinafter, the present invention will be described in detail. The present invention is not limited to the following embodiments, and it may be carried out with any modification within the scope that has the effect of the invention.

### [Hard coat film]

One embodiment of the present invention is a hard coat film which comprises a base material layer containing a thermoplastic resin, and a hard coat layer, which is a cured coating film layer, on at least one side of the base material layer. The hard coat layer is provided to improve the surface hardness and scratch resistance of the hard coat film.

Hereinafter, each of the layered components included in such a laminate, i.e., the hard coat film, will be described.

### [Hard coat layer]

The hard coat layer according to the present invention contains a fluorine-containing leveling agent, and the surface roughness of the hard coat layer is 10 nm or less, preferably 9.6 nm or less, and more preferably 8.0 nm or less. In the present invention, the surface roughness refers to the value measured by the method described in the examples below.

In addition, in the hard coat layer of the present invention, the atomic concentration of fluorine F(80°) measured by angle resolved XPS at an angle of 80° is 10 atomic% or less, preferably 8 atomic% or less, and more preferably 5 atomic% or less. Meanwhile, the atomic concentration of fluorine F(30°) measured by angle resolved XPS at an angle of 30° is 10 atomic% or less, preferably 9 atomic% or less, and more preferably 7 atomic% or less. In the present invention, the atomic concentration of fluorine F refers to the value measured by the method described in the examples below.

The present invention is characterized by the use of a fluorine-containing leveling agent in the hard coat layer for the purpose of lowering the surface tension of the coating film to reduce uneven coating.

The term "leveling" refers to the property of a coating to flow after it is applied, producing a flat, smooth coating film. The surface of the coating film is judged to have a good leveling property by observing that there are not many microscopic height differences, such as brush marks, orange peel texture (texture like the surface of an orange peel), and waviness.

In a hard coat film using a general fluorine-containing leveling agent, it is difficult to achieve both excellent appearance and recoatability because fluorine atoms segregate to the surface of the hard coat layer due to its high smoothness. Thus, the present inventors have realized to provide a hard coat film with excellent appearance (with less coating cissing) and excellent recoatability by eliminating the segregation of fluorine atoms to the surface of the hard coat layer by using a fluorine-containing leveling agent, which does not easily segregate to the surface of the hard coat layer.

While the fluorine-containing leveling agent used in the hard cord layer of the present invention is not particularly limited as long as it can result the leveling property (smoothness) and recoatability (reapplicability) as described above, Ftergent 602A (manufactured by NEOS Company Limited: a surfactant with a perfluoroalkenyl group, an UV-reactive group, and a lipophilic group (organic component)), Ftergent 218 (manufactured by NEOS Company Limited), Ftergent 683 (manufactured by NEOS Company Limited), MEGAFACE R-40 (manufactured by DIC Corporation), etc. can be used favorably.

In the present invention, the content of the fluorine-containing leveling agent is preferably 0.01 mass% or more but 1 mass% or less, and more preferably 0.05 mass% or more but 0.5 mass% or less, when the content of the urethane (meth)acrylate, which is preferably used as a coating to form a hard coat layer, is set to 100 mass%.

In one embodiment of the present invention, an aspect that has a low refractive index layer and/or a high refractive index layer described below on the hard coat layer is preferred, but in the case of a hard coat film with a laminate structure including a low refractive index layer, a high refractive index layer, and a hard coat layer, it is preferred that the hard coat layer be laminated between the base material layer and the high refractive index layer. In other words, it is preferable to laminate these layers in the order of the base material layer, the hard coat layer, the high refractive index layer, and the low refractive index layer.

In a hard coat film with such a laminate structure, a high anti-reflection effect is realized and the surface hardness, i.e., the hardness of the surface on the other side from the base material layer, is improved.

The hard coat layer is preferably formed by a hard coat treatment applied to the surface of the base material layer, etc. Specifically, it is preferable to laminate the hard coat layer by applying and then curing a hard coat material that can be thermally cured or that can be cured by an active energy ray.

One example of a coating that can be cured using an active energy ray is a resin composition consisting of one or more mono- or polyfunctional acrylate monomers or oligomers, or more preferably, a resin composition containing a urethane (meth)acrylate oligomer. Herein, "(meth)acrylates" refer to acrylates and methacrylates.

These resin compositions preferably contain the fluorine-containing leveling agent mentioned above as an essential component, and further a photopolymerization initiator as a curing catalyst and solid inorganic particles.

Examples of the thermally curable resin coating include those based on polyorganosiloxane or a cross-linked acrylic. Such resin compositions, without the fluorine-containing leveling agent, are commercially available as hard coat agents for acrylic or polycarbonate resins, and can be appropriately selected considering their suitability for the coating line.

In addition to an organic solvent, various stabilizers such as an UV absorber, a light stabilizer, and an antioxidant, as well as a defoaming agent, a thickener, an antistatic agent, an antifogging agent, a surfactant, and the like may be added to these coatings, as necessary.

An example of the hard coat coating that can be cured using an active energy ray is one obtained by adding 1-10 parts by mass of a photopolymerization initiator to 100 parts by mass of a photopolymerizable resin composition, which is obtained by mixing 40-95 mass% of a hexafunctional urethane acrylate oligomer with, for example, about 5-60 mass% of a (meth)acrylate such as 2-(2-vinyloxyethoxy)ethyl (meth)acrylate [2-(2-vinyloxyethoxy)ethyl acrylate: VEEA].

As the photopolymerization initiator described above, a generally known photopolymerization initiator can be used. Specifically, examples include benzoin, benzophenone, benzoin ethyl ether, benzoin isopropyl ether, 2,2-dimethoxy-2-phenylacetophenone, 1-hydroxycyclohexyl phenyl ketone, 2-hydroxy-2-methyl-1-phenylpropane-1-one, azobisisobutyronitrile, and benzoyl peroxide.

In addition, while the above-mentioned solid inorganic particles are not particularly limited as long as they can improve the scratch resistance of the hard coat layer, nanosilica particles, nano-alumina particles, nano-zirconia particles, glass particles, or the like can be preferably used favorably, and nanosilica particles can be used more favorably.

In the present invention, the content of the solid inorganic particles is preferably 0.5 mass% or more but 3 mass% or less, and more preferably 1.0 mass% or more but 2.0 mass% or less, when the content of the urethane (meth)acrylate, which is preferably used as a coating to form a hard coat layer, is set to 100 mass%.

The refractive index value of the hard coat layer is preferably comparable to the refractive index of the base material layer. Specifically, the hard coat layer preferably have a refractive index in the range of 1.43-1.65. The refractive index of the hard coat layer is more preferably 1.47-1.60, and still more preferably 1.49-1.57.

In addition, the difference between the refractive index of the base material layer and the refractive index of the hard coat layer is preferably 0.04 or less, more preferably 0.03 or less, and still more preferably 0.02 or less.

In order to make the refractive index of the hard coat layer closer to the refractive index of the base material layer, a high refractive index component described below may be added to the hard coat coating as appropriate.

While the thickness of the hard coat layer is not particularly limited, it is preferably 1-10 µm, more preferably 2-8 µm, and still more preferably 2-6 µm.

If a second curable layer is to be further formed on a first curable layer containing the fluorine-containing leveling agent described above for surface improvement, the leveling agent present on the surface of the first curable layer will block the interface between the first and second curable layers, and thus a bond joining the first and second curable layers will not be formed, resulting in a problem of adhesion defect. If the wettability of the first curable layer is low, cissing may occur when the second curable layer is applied, in which case the second curable layer may not be formed. Therefore, it is necessary to select an appropriate leveling agent that solves these problems.

In addition, if the first curable layer is not fully cured, the leveling agent may be extracted by a second curable layer-forming solution and bleed out onto the second curable layer as the second curable layer is formed, affecting the performance of the surface of the second curable layer.

### [Base material layer]

The base material layer contained in the hard coat film contains a thermoplastic resin. There is no particular limitation on the type of the thermoplastic resin, and various resins including polycarbonate (PC) resins, acrylic resins such as polymethyl methacrylate (PMMA), polyethylene terephthalate (PET), triacetyl cellulose (TAC), polyethylene naphthalate (PEN), polyimide (PI), cyclo-olefin copolymers (COC), norbomene-containing resins, polyethersulfone, cellophane, aromatic polyamides, and the like can be used. Among these options, the thermoplastic resin of the base material layer preferably contains at least a polycarbonate resin.

The type of the polycarbonate resin contained in the base material layer is not particularly limited as long as it contains a -[O-R-OCO]- unit containing a carbonate ester bond in the molecular main chain (where R is an aliphatic group, an aromatic group, or one containing both aliphatic and aromatic groups, and one having a linear or branched structure), but it is preferably a polycarbonate having a bisphenol skeleton or the like, and particularly preferably a polycarbonate having a bisphenol A skeleton or a bisphenol C skeleton. A mixture or copolymer of bisphenol A and bisphenol C may be used as the polycarbonate resin. The hardness of the base material layer can be improved by using a bisphenol C-based polycarbonate resin, for example, a polycarbonate resin of bisphenol C only, or a mixture or copolymer of bisphenol C and bisphenol A.

The viscosity average molecular weight of the polycarbonate resin is preferably 15,000-40,000, more preferably 20,000-35,000, and still more preferably 22,500-25,000.

Moreover, examples of the acrylic resin contained in the base material layer include, but are not particularly limited to, a homopolymer of any (meth)acrylic ester, such as polymethyl methacrylate (PMMA) and methyl methacrylate (MMA), a copolymer of PMMA or MMA with one or more other monomers, and also a mixture of several types of these resins. Examples of the monomer include a cyclic acid anhydride unit, a N-substituted maleimide unit, an aromatic vinyl compound unit, and an aliphatic vinyl compound unit. Among these, a (meth)acrylate containing a cyclic alkyl structure is preferred due to its low birefringence, low hygroscopicity, and excellent heat resistance. Examples of such (meth)acrylic resins include, but are not limited to, Acrypet (manufactured by Mitsubishi Rayon Co., Ltd), Delpet (manufactured by Asahi Kasei Chemicals Corporation), and Parapet (manufactured by Kuraray Co., Ltd.).

The use of a mixture containing the polycarbonate resin and the acrylic resin described above is preferred because it improves the hardness of the base material layer, especially the outer layer (the layer on the side of the hard coat layer) of the base material layer that forms a laminate.

The base material layer may also contain additives as components other than the thermoplastic resin. Such additives refer to, for example, at least one additive selected from the group consisting of a heat stabilizer, an antioxidant, a flame retardant, a flame retardant aid, an UV absorber, a mold release agent, and a coloring agent. Moreover, an antistatic agent, a fluorescent brightening agent, an antifogging agent, a flow modifier, a plasticizer, a dispersant, an antibacterial agent, or the like may also be added to the base material layer.

In the base material layer, the thermoplastic resin is preferably contained in an amount of 80 mass% or more, more preferably 90 mass% or more, and particularly preferably 95 mass% or more. Furthermore, the thermoplastic resin of the base material layer contains a polycarbonate resin in an amount of preferably 50 mass% or more, more preferably 70 mass% or more, and particularly preferably 75 mass% or more.

The base material layer preferably has a refractive index in the range of 1.49-1.65. The refractive index of the base material layer is more preferably about 1.49-1.60.

While the thickness of the base material layer is not particularly limited, it is preferably 30-1,000 µm (1 mm), more preferably 50-700 µm, and particularly preferably 100-500 µm. The hard coat film may be provided with two or more base material layers, and when multiple base material layers are provided, the total thickness of the base material layers is, for example, 100-1,000 µm, and preferably about 200-500 µm.

Examples of the base material layer containing multiple layers described above, i.e., a base material layer with a multi-layer laminate structure, include the following: specifically, one in which a layer of the aforementioned polycarbonate resin (PC), such as bisphenol A, is laminated with a layer of the aforementioned acrylic resin, such as a polymethyl (meth)acrylate (PMMA: polymethyl acrylate and/or polymethyl methacrylate)), that serves as an outer layer (the layer on the side of the hard coat layer); one in which it is laminated with a resin layer consisting of a copolymer of the aforementioned PMMA and one or more other monomers; one in which a layer of a polycarbonate resin (PC) such as bisphenol A is laminated with a polycarbonate resin (PC) such as bisphenol C; and so on. In the case of a laminate in which a layer of a polycarbonate resin (PC) containing bisphenol A is laminated with a layer of a polycarbonate resin (PC) containing bisphenol C, for example, the layer of the polycarbonate resin containing bisphenol C is used as the outer layer.

The outer layer is preferably one with high hardness, especially one that is harder than the other base material layer.

In the same way as the polycarbonate resin that forms a single-layer base material layer, those listed above can also be used suitably as a polycarbonate resin that is used as a thermoplastic resin in the laminate. For example, a mixture or copolymer of bisphenol A and bisphenol C may be used. The effect of being able to improve the hardness especially of the outer layer (the layer on the side of the hard coat layer) of the base material layer forming a laminate can be achieved by using a bisphenol C-based polycarbonate resin, for example, a polycarbonate resin of bisphenol C only or a polycarbonate resin of a mixture or copolymer of bisphenol C and bisphenol A. To further improve the hardness, a mixture of a polycarbonate resin, for example, a bisphenol C-based polycarbonate resin, and the aforementioned acrylic resin may be used.

### [Low refractive index layer (anti-reflection layer)]

As mentioned above, according to the present invention, it is preferable to have a low refractive index layer on the hard coat layer. The low refractive index layer preferably has a refractive index that is lower than the refractive index of the hard coat layer by 0.05 or more, more preferably 0.07 or more, and particularly preferably 0.08-0.12. A refractive index that is 0.05 or more lower than the refractive index of the hard coat layer is preferred because sufficient anti-reflective performance can be achieved.

The refractive index of the low refractive index layer is preferably in the range of 1.35-1.44, more preferably in the range of 1.38-1.42, and particularly preferably in the range of 1.39-1.41. If the refractive index is less than 1.35, it may be difficult to achieve sufficient hardness, while if the refractive index exceeds 1.44, it may be difficult to achieve sufficient anti-reflective performance.

The thickness of the low refractive index layer is preferably 70-130 nm, more preferably 80-120 nm, and particularly preferably 90-110 nm. If the thickness of the low refractive index layer is less than 70 nm, the wavelength range of light whose reflection can be suppressed shifts significantly to the lower wavelength side, resulting in deterioration of the luminous reflectance, while if the thickness exceeds 130 nm, the wavelength range of light whose reflection can be suppressed shifts significantly to the higher wavelength side, resulting in deterioration of the luminous reflectance.

The low refractive index layer is preferably placed on the outermost side of the hard coat film to suppress reflection of the hard coat film.

The low refractive index layer is formed by applying a coating solution consisting of a composition for forming a low refractive index layer to the hard coat layer, followed by curing by UV irradiation. The application method, curing conditions, and diluting solvent for adjusting viscosity are not particularly limited and can be selected as needed. The composition for forming a low refractive index layer can contain, for example, an UV-curable resin, a fluorine-containing leveling agent, a silicon-containing slip agent, hollow silica particles, and a photopolymerization initiator.

### <UV-curable resin>

The type of the UV-curable resin that forms the low refractive index layer is not particularly limited as long as it is a polyfunctional (meth)acrylate. As a resin for forming the low refractive index layer in this type of film, other than a polyfunctional (meth)acrylate, one that uses a reactive silicon compound such as γ-acryloxypropyltrimethoxysilane or the like as a starting ingredient is generally used, but from the perspective of achieving both productivity and hardness, a composition containing an UV-curable polyfunctional (meth)acrylate as the main ingredient is preferred.

While the polyfunctional (meth)acrylate is not particularly limited, examples thereof include: (meth)acrylic derivatives of polyfunctional alcohols such as a dipentaerythritol hexa(meth)acrylate, a tetramethylolmethane tetra(meth)acrylate, a tetramethylolmethane tri(meth)acrylate, a trimethylolpropane tri(meth)acrylate, a 1,6-hexanediol di(meth)acrylate, and a 1,6-bis(3-(meth)acryloyloxy-2-hydroxypropyloxy)hexane; a polyethylene glycol di(meth)acrylate; and a polyurethane (meth)acrylate. In the present invention, a polyurethane (meth)acrylate is particularly preferably used.

The polyfunctional (meth)acrylate may also be a fluorine-containing monomer. A fluorine-containing monomer having a structure, in which fluorine atoms are introduced into the molecule as methylene fluoride groups or methine fluoride groups, is a monomer in which almost all of the fluorine atoms are introduced into the molecule as methylene fluoride groups or methine fluoride groups, and any known monomers can be used as long as they are polyfunctional monomers. Specifically, it can be any bifunctional or higher (polyfunctional) monomer or a mixture thereof. These fluorine-containing compounds can increase the strength and hardness of the cured film and improve the scratch and abrasion resistance of the surface of the cured film. Among the fluorine-containing compounds, a fluorine-containing polyfunctional (meth)acrylate is preferred because it can form a crosslinked structure and provide the cured film with high strength and hardness.

### <Fluorine-containing leveling agent>

The fluorine-containing leveling agent contained in the low refractive index layer can smoothen the layer and impart an anti-fingerprint property, so that the adhering property of fingerprints, i.e., oil that adhere when the surface of the low refractive index layer is touched, can be weakened, thereby enhancing the anti-fingerprint property.

Examples of the preferable fluorine-containing leveling agent contained in the low refractive index layer include (meth)acrylates containing a C₂-C₇ perfluoroalkyl chain. Specifically, OPTOOL DAC-HP manufactured by Daikin Industries Ltd., MEGAFACE RS-75 and RS-78 manufactured by DIC Corporation, etc. are preferred.

In the composition for forming the low refractive index layer, the fluorine-containing leveling agent is preferably contained in an amount of 1-20 mass%, and more preferably in an amount of 2.5-10 mass%. If this content is less than 1 mass%, it may not be possible to weaken the adhering property of fingerprints that adhere when the surface of the low refractive index layer is touched. On the other hand, if the content exceeds 20 mass% it may be difficult to obtain sufficient hardness and anti-reflective performance.

### <Silicon-containing slip agent>

The silicon-containing slip agent contained in the low refractive index layer can impart cloth scratch resistance. A slip agent is an additive used to maintain the physical stability of the materials, such as preventing adhesion to a metal surface, preventing adhesion between the materials, improving flowability of the material, and reducing friction within the material or with a metal surface, during the heat molding process of the thermoplastic resin.

Examples of the silicon-containing slip agent used in the present invention preferably include polydimethylsiloxane, and more preferably polyether-modified polydimethylsiloxane having an acrylic group or polyester-modified polydimethylsiloxane having an acrylic group. Specifically, BYK-UV3500, BYK-UV3530, BYK-UV3570, etc. manufactured by BYK Japan KK are preferred.

In the composition for forming the low refractive index layer, the silicon-containing slip agent is preferably contained in an amount of 5-20 mass%, and more preferably in an amount of 10-17.5 mass%. If this content is less than 5 mass%, cloth scratch resistance may not be sufficient, while if the content exceeds 20 mass%, it may be difficult to achieve sufficient hardness and anti-reflective performance.

In the present invention, the mass ratio of the silicon-containing slip agent to the fluorine-containing leveling agent contained in the low refractive index layer is preferably 9:1-5:5 and more preferably 7:1-5:5. If the mass ratio of the silicon-containing slip agent is greater than 9:1, it may be difficult to achieve sufficient anti-fingerprint property, while if the mass ratio of the fluorine-containing leveling agent is greater than 5:5, it may be difficult to achieve sufficient cloth scratch resistance.

### <Hollow silica>

The low refractive index layer in the present invention preferably contains hollow silica particles to lower the refractive index of the low refractive index layer. Hollow silica particles are particles of silica (silicon dioxide, SiO₂) that are formed nearly spherical in shape and have cavities within their outer shell. Their average particle size is 10-100 nm, the thickness of the outer shell is about 1-60 nm, the hollowness percentage of the hollow part is 40-45%, and the refractive index is as low as 1.20-1.29. Since the hollow part contains air with a refractive index of 1.0, the cured film formed by curing the polyfunctional (meth)acrylate can have a lower refractive index and lower reflectance, and the inorganic particles, i.e., silica particles, can improve the scratch and abrasion resistance of the cured film.

If the hollowness percentage of the hollow part is less than 40%, the amount of air in the hollow part becomes small, and it may not be possible to impart a low refractive index and low reflectance to the cured film. On the other hand, if the hollowness percentage of the hollow part exceeds 45%, the outer shell needs to be made thinner to increase the hollowness percentage, making its production difficult.

It is also preferable to modify the hollow silica particles with a silane coupling agent if necessary. This can result in a superior effect not found in conventional general (unmodified) silica particles or hollow silica particles, namely, excellent compatibility with the polyfunctional (meth)acrylate. Therefore, when modified hollow silica particles are mixed with a polyfunctional (meth)acrylate, the aggregation of the modified hollow silica particles can be suppressed and a cured film with no whitening and excellent transparency can be obtained. In addition, the polymerizable double bond of the silane coupling agent copolymerizes (chemically bonds) with the polymerizable double bond of the polyfunctional (meth)acrylate in the cured film to form a strong cured film that can dramatically improve the scratch and abrasion resistance of the cured film.

The mass ratio of the hollow silica and the resin material (the low refractive index coating in Example 5 described below) contained in the low refractive index layer is preferably 20:80-60:40, and more preferably 30:70-50:50. Increasing the amount of hollow silica particles added may increase the unevenness of the surface shape, making it difficult to achieve both anti-fingerprint property and cloth scratch resistance. This is because fingerprints are more likely to be buried and particles are more likely to fall off.

### <Other components>

The low refractive index layer may contain metal fluoride particles or the like to lower the refractive index of the low refractive index layer. When metal fluoride particles are used, examples of the metal fluoride contained in the particles include magnesium fluoride, aluminum fluoride, calcium fluoride, and lithium fluoride. The metal fluoride particles are preferably in particulate form, and their particle size (diameter) is, for example, but not particularly limited to, 10-200 nm, preferably 30-100 nm, more preferably 35-80 nm, and particularly preferably 45-65 nm.

Metal oxide particles (e.g., silica) may also be contained to improve scratch resistance.

It is preferred that the composition for forming a low refractive index layer, which forms the low refractive index layer, contains a photoinitiator (photopolymerization initiator). In addition, a solvent may be contained in the composition for forming a low refractive index layer.

### [High refractive index layer (anti-reflection layer)]

Preferably, the hard coat film of the present invention is further provided with a high refractive index layer between the low refractive index layer and the hard coat layer to further reduce the reflectance. The high refractive index layer has a refractive index higher than that of the base material layer and has an anti-reflection function like the low refractive index layer.

The high refractive index layer preferably comprises a polymer of a resin material containing a (meth)acrylate and a urethane (meth)acrylate derived from a fluorene-based diol, isocyanate, and a (meth)acrylate. In other words, the high refractive index layer is preferably a mixture of at least a (meth)acrylate and a urethane (meth)acrylate, which is obtained by the dehydration-condensation reaction of the three components, i.e., a fluorene-based diol, isocyanate, and a (meth)acrylate.

In the above resin material, the ratio of the urethane (meth)acrylate to the (meth)acrylate is preferably 99:1-50:50 (by weight), more preferably 95:5-70:30, still more preferably 93:7-80:20, and particularly preferably 90:10-85:15.

The refractive index value of the high refractive index layer is higher than the refractive index value of the base material layer, and the refractive index of the high refractive index layer is preferably 1.68-1.75, more preferably 1.69-1.74, and still more preferably about 1.70-1.73.

In addition, the difference between the refractive index of the high refractive index layer and the refractive index of the base material layer is preferably at least 0.09, more preferably at least 0.12, still more preferably at least 0.15, and particularly preferably at least 0.17. Moreover, the range of the difference between the refractive index of the high refractive index layer and the refractive index of the base material layer is, for example, 0.03-0.70, preferably 0.10-0.50, and still more preferably 0.15-0.26. Thus, by increasing the difference between the refractive index value of the high refractive index layer and the refractive index value of the base material layer, the reflectance of the surface of the hard coat film on the side of the high refractive index layer can be increased.

### <High refractive index component>

The high refractive index layer preferably contains a high refractive index component. The high refractive index component is added to increase the refractive index of the high refractive index layer. In other words, by forming the high refractive index layer using a high refractive index component, the refractive index difference between the high refractive index layer and the base material layer can be increased, thereby further reducing the reflectance of the hard coat film.

Examples of the high refractive index component include titanium oxide, zirconium oxide (ZrO₂), zinc oxide, alumina, colloidal alumina, lead titanate, lead red, chrome yellow, zinc yellow, chromium oxide, ferric oxide, iron black, copper oxide, magnesium oxide, magnesium hydroxide, strontium titanate, yttrium oxide, hafnium oxide, niobium oxide, tantalum oxide (Ta₂O₅), barium oxide, indium oxide, europium oxide, lanthanum oxide, zircon, tin oxide, lead oxide, and double oxides thereof, such as lithium niobate, potassium niobate, lithium tantalate, and magnesium-aluminum oxide (MgAl₂O₄).

A rare earth oxide can also be used as the high refractive index component. For example, scandium oxide, yttrium oxide, lanthanum oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, and lutetium oxide, etc. can be used.

Among the many options mentioned above, zirconia (zirconium oxide) is preferred as the high refractive index component.

The high refractive index component is preferably a particulate member. The particle size (diameter) of the high refractive index particulate member is not particularly limited, but it is, for example, 1-100 nm, preferably 5-50 nm, more preferably 7.5-30 nm, and particularly preferably 10-25 nm.

The high refractive index particulate member, for example, preferably include a coating of an organic layer that serves as a surface treatment layer covering the outer surface of the metal oxide or the like. The coating of the organic layer improves the compatibility of the high refractive index component with the resin material forming the high refractive index layer and firmly bonds the high refractive index component to the resin material.

The surface treatment layer is preferably a coating of an organic layer that has an UV-reactive (curable) functional group on the surface.

The high refractive index layer preferably comprises the aforementioned resin material and the high refractive index component in a weight ratio of 10:90-40:60, and the ratio of the aforementioned resin material to the high refractive index component is more preferably 15:85-35:65, and still more preferably 20:80-30:70.

While the thickness of the high refractive index layer is not particularly limited, it is preferably 10-300 nm, more preferably 30-250 nm, still more preferably 80-200 nm, and particularly preferably 130-170 nm.

### <Other components>

The high refractive index layer or the aforementioned resin material forming the high refractive index layer, preferably contains at least either a photoinitiator or a leveling agent, particularly preferably a photoinitiator. In addition, a solvent may be contained in the aforementioned resin material. Examples of the leveling agent include a fluorine-based leveling agent, an acrylic-based leveling agent, and a silicone-based leveling agent.

### [Other layers]

According to the present invention, in addition to the low refractive index layer and the high refractive index layer, the following functional layers may be provided on the hard coat layer by wet coating. Examples include a metal or metal oxide layer provided by vapor deposition or sputtering, an adhesive or bonding layer, a water/oil repellent layer, an antistatic layer, a visibility enhancing layer such as AG patterns, and a decorative layer.

### [Other properties of hard coat film]

### <Reflectance (luminous reflectance)>

The luminous reflectance on the surface of a hard coat film of a preferred embodiment of the present invention on the low refractive index layer side is preferably 3.0% or less, more preferably 1.6-2.8%, and particularly preferably 1.6-2.5%, as measured according to JIS Z 8701. According to the present invention, the method of measuring the luminous reflectance may be the method described in the examples below.

### <Cloth scratch resistance>

The surface of the hard coat film of one preferred embodiment of the present invention on the low refractive index layer side preferably has excellent cloth scratch resistance. Specifically, it is preferred that no visible scratches occur when 4-ply medical gauze MediGauze (manufactured by Osaki Medical Corp.) is moved back and forth under a load of 100 g/cm² 100 times across the surface of the hard coat film of one preferred embodiment of the present invention on the low refractive index layer side.

### <Anti-fingerprint property>

The surface of the hard coat film of one preferred embodiment of the present invention on the low refractive index layer side preferably has excellent anti-fingerprint property. Specifically, fingerprints are preferably completely wiped off within five wipes when tested as described in the examples below.

### [Method for producing hard coat film]

When producing a hard coat film, it is preferable to form a base material layer first. The base material layer is produced by processing a material such as a resin composition into a layer (sheet) by a conventional technique. For example, there are methods such as extrusion molding and cast molding. In the case of extrusion molding, for example, pellets, flakes, or powder of a resin composition is melted and kneaded in an extruder, then extruded from a T-die, etc., and the resulting semi-molten sheet is cooled and solidified while being pressed between rolls, thereby forming a sheet.

A resin material is then applied to the outer surface of a single or multiple base material layers and cured to form a hard coat layer or a low refractive index layer. Light curing, heat curing, or other techniques can be used to cure the resin material.

### [Resin molded article]

Another embodiment of the present invention is a resin molded article having the above-described hard coat film on its surface. The resin molded article of the present invention is obtained, for example, by integrating the hard coat film on the surface of a resin molded article at the same time as the resin is molded by insert molding fusion method. For example, by holding the hard coat film in a cavity of an injection mold and injecting a molten resin into the mold, a resin molded article with the hard coat film integrated on its surface can be obtained.

Examples of such a resin molded article include films applied to the surfaces of computer screens, television screens, plasma display panels, etc., as well as films used as surfaces of polarizing plates in liquid crystal displays, sunglass lenses, eyeglass lenses with degrees, viewfinder lenses for cameras, covers for various gauges, car glass, train glass, display panels for automobiles, electronic equipment housings, etc.

### EXAMPLES

Hereinafter, the present invention will be described more specifically by means of examples. The present invention, however, is not limited to the following examples, and may be implemented with any modification without departing from the gist of the present invention.

### [Example 1]

As a base material, a transparent base material layer (DF02U manufactured by MGC Filsheet Co., Ltd.; total thickness: 254 µm) consisting of a laminate of a polycarbonate resin layer made of 2,2-bis(4-hydroxyphenyl)propane (bisphenol A) and a methacrylic resin layer was used. The refractive index of this transparent base material layer was 1.498 as measured by the method described below.

To 100 mass% of urethane acrylate UN-954 (manufactured by Negami Chemical Industrial Co., Ltd.), 5 mass% of 1-hydroxy-cyclohexyl-phenyl-ketone (Omnirad-184 manufactured by IGM Resins B.V.) as a photopolymerization initiator, 2 mass% of nanosilica particles NanoBYK-3650 (manufactured by BYK Japan KK), and 0.1 mass% of Ftergent 602A (manufactured by NEOS Company Limited: a surfactant having a perfluoroalkenyl group, an UV-reactive group, and a lipophilic group (organic component)) as a fluorine-containing leveling agent were added, and the resultant was mixed with a solvent (propylene glycol monomethyl ether) to adjust the concentration to a solid content of 25 mass%, thereby preparing hard coat coating A-1.

To form a hard coat layer, hard coat coating A-1 described above was applied to the transparent base material layer using a bar coater to achieve a dry film thickness of 3 µm and the coating was dried in a drying oven at 80°C for 2 minutes. Furthermore, the resultant was irradiated with UV light using an UV irradiator so that the integrated light dose was 200 mJ/cm², thereby obtaining hard coat film B-1. The refractive index of hard coat film B-1 obtained was 1.501 as measured by the method described below.

### [Example 2]

Hard coat film B-2 was obtained in the same manner as in Example 1, except that hard coat coating A-2, which was obtained by changing the fluorine-containing leveling agent in hard coat coating A-1 to Ftergent 218 (manufactured by NEOS Company Limited), was used.

### [Example 3]

Hard coat film B-3 was obtained in the same manner as in Example 1, except that hard coat coating A-3, which was obtained by changing urethane acrylate in hard coat coating A-1 to KRM8296 (manufactured by DAICEL-ALLNEX LTD.) and without using nanosilica particles NanoBYK-3650, was used.

### [Example 4]

Hard coat film B-4 was obtained in the same manner as in Example 1, except that hard coat coating A-4, which was obtained by changing urethane acrylate in hard coat coating A-1 to EBECRYL8402 (manufactured by DAICEL-ALLNEX LTD.) and without using nanosilica particles NanoBYK-3650, was used.

### [Comparative example 1]

Hard coat film B-5 was obtained in the same manner as in Example 1, except that hard coat coating A-5, which was obtained by changing the fluorine-containing leveling agent in hard coat coating A-1 to Ftergent 681 (manufactured by NEOS Company Limited), was used.

### [Comparative example 2]

Hard coat film B-6 was obtained in the same manner as in Example 1, except that hard coat coating A-6, which was obtained by changing the fluorine-containing leveling agent in hard coat coating A-1 to MEGAFACE RS-75 (manufactured by DIC Corporation: having a perfluoroalkenyl group, an UV-reactive group, and a lipophilic group (organic component)), was used.

### [Comparative example 3]

Hard coat film B-7 was obtained in the same manner as in Example 1, except that hard coat coating A-7, which was obtained by changing the fluorine-containing leveling agent in hard coat coating A-1 to MEGAFACE RS-56 (manufactured by DIC Corporation), was used.

### [Comparative example 4]

Hard coat film B-8 was obtained in the same manner as in Example 1, except that hard coat coating A-8, which was obtained by changing urethane acrylate in hard coat coating A-1 to KRM8296 (manufactured by DAICEL-ALLNEX LTD.), without using nanosilica particles NanoBYK-3650, and changing the fluorine-containing leveling agent to MEGAFACE RS-75 (manufactured by DIC Corporation), was used.

### [Comparative example 5]

Hard coat film B-9 was obtained in the same manner as in Example 1, except that hard coat coating A-9, which was obtained by changing urethane acrylate in hard coat coating A-1 to EBECRYL8402 (manufactured by DAICEL-ALLNEX LTD.), without using nanosilica particles NanoBYK-3650, and changing the fluorine-containing leveling agent to MEGAFACE RS-75 (manufactured by DIC Corporation), was used.

The properties of the hard coat films of Examples 1-4 and Comparative examples 1-5 produced in this way were measured as follows.

### <Refractive index>

The refractive index value (nD) was measured at 20°C at the D-line, i.e., a wavelength of 589 nm, using an Abbe refractometer (model: NAR-3T) manufactured by Atago Co., Ltd.. For a solution containing a solvent, the refractive index was measured with the solvent still contained, and the refractive index value of the solution without the solvent was calculated from the measured value and the dilution ratio of the solvent.

### <Surface roughness>

The surface roughness of the hard coat film was measured under the following conditions using the multiple view mode of scanning white light interferometer VS1330 manufactured by Hitachi High-Tech Corporation.

### [Optical conditions]

- Camera: Sony XCL-C30 1/3-type
- Lens: Two-beam interference objective lens (5x)

### [Measurement conditions]

- Mode: Wave
- Measurement area (1 field of view): 935 µm x 701 µm
- Number of fields of view: 5 x 5
- Overlap rate: 20%
- Measurement area (total fields of view): 3,928 µm x 2,946 µm

### <Angle resolved XPS (X-ray photoelectron spectroscopy)>

Measurements were performed under the following conditions using scanning X-ray photoelectron spectrometer PHI5000 manufactured by ULVAC-PHI, Inc.
- X-ray source: Monochrome Al Kα, 1486.6 eV, 50W
- Analyzed area: 1.0 x 0.2 mm²
- Measurement angles: 30°, 80°
- Pass energy: 23 eV (C1s, O1s, F1s)
   187 eV (N1s, Si2p)
- Photoelectron take-off angle: Narrow mode (±5°)

Surface atom concentrations were calculated from the obtained peak areas using relative sensitivity factors provided by ULVAC-PHI, Inc. Since concentrations of N1s and Si2p were low, the pass energy was lowered for high sensitivity measurement.

### <Contact angle (propylene glycol monomethyl ether)>

The contact angle was measured using automatic contact angle meter DMo-601 (manufactured by Kyowa Interface Science Co., Ltd.) with a propylene glycol monomethyl ether test solution under the following conditions.
- Liquid volume: 2.0 µL
- Analysis method: θ/2 method

### <Recoatability (suitability for recoating)>

On the hard coat layer of each hard coat film, a coating of urethane acrylate UN-954 (manufactured by Negami Chemical Industrial Co., Ltd.), which was diluted with propylene glycol monomethyl ether (PGME) to a solid concentration of 25 mass%, was applied using a bar coater to achieve a dry film thickness of 1 µm, and the coating was dried in a drying oven at 80°C for 2 minutes. Recoatability was evaluated on a three-level scale based on the number of cissing that occurred. The evaluation criteria were as follows, and products rated good were considered acceptable in terms of recoatability.
Good: 0, 1
Fair: 2-5
Poor: 6 or more

### <Smoothness>

To eliminate the effect of backside reflection, the surface of the hard coat film on the side of the base material layer (or either side in the case of double-sided hard coat layers) was colored with black magic ink. The smoothness of the hard coat film was evaluated by visual inspection under a three-wavelength fluorescent lamp with the uncolored side up.

Good (good smoothness): Little or no distortion or unevenness on the surface.

Fair (Slightly good smoothness): Slight distortion or unevenness on the surface.

Poor (Poor smoothness): Distortion and unevenness on the surface.

### <Pencil hardness>

The pencil hardness of the surface of the hard coat layer of the hard coat film was evaluated according to JIS K5600-5-4. The evaluation was carried out under a load of 500 g.

**[Table 1]**

| | | | Unit | Example 1 | Example 2 | Example 3 | Example 4 | Comparative example 1 | Comparative example 2 | Comparative example 3 | Comparative example 4 | Comparative example 5 |
|---|---|---|---|---|---|---|---|---|---|---|---|---|
| Composition | Hard coat coating | | | A-1 | A-2 | A-3 | A-4 | A-5 | A-6 | A-7 | A-8 | A-9 |
| | Urethane acrylate | | | UN954 | UN954 | KRM 8296 | EBECRYL 8402 | UN954 | UN954 | UN954 | KRM 8296 | EBECRYL 8402 |
| | Silica particles NanoBYK3650 | | | Good | Good | - | - | Good | Good | Good | - | - |
| | Fluorine-based leveling agent | | | FT-602A | FT-218 | FT-602A | FT-602A | FT-681 | RS-75 | RS-56 | RS-75 | RS-75 |
| Evaluation item | Surface roughness | | nm | 5.9 | 9.6 | 7.4 | 1.7 | 11.2 | 8.3 | 7.4 | 5.2 | 2.1 |
| | Angle resolved XPS | I(30°) | atomic% | 2 | 7 | 6 | 6 | 0 | 23 | 21 | 28 | 28 |
| | | I(80°) | atomic% | 1 | 4 | 3 | 4 | 0 | 12 | *15* | 16 | 17 |
| | Contact angle | PGME | ∘ | <2 | 8.2 | 8.2 | 6.9 | <2 | 39.3 | 30.9 | 45.7 | 47.9 |
| | Recoatability | | | Good | Good | Good | Good | Good | Poor | Poor | Poor | Poor |
| | Smoothness | | | Good | Fair | Good | Good | Poor | Good | Good | Good | Good |
| | Pencil hardness | | | H | H | H | H | H | H | H | H | H |

### [Example 5]

A curable low refractive index coating was prepared as follows. First, dry air was pre-injected into a five-necked flask equipped with a stirrer, a thermometer, a cooler, a monomer dropping funnel, and a dry air inlet tube, to dry inside the system. Then, 58.9 parts by mass of 2,2,3,3-tetrafluoro-1,4-butanediol (C4DIOL manufactured by Exfluor Research Corporation), 279.8 parts by mass of pentaerythritol triacrylate, 0.5 parts by mass of dibutyltin laurylate as a polymerization catalyst, and 500 parts by mass of methyl ethyl ketone as a solvent were added to the five-neck flask, and heated to 60°C. Then, after 161.3 parts by mass of isophorone diisocyanate was added, the reaction was carried out at 60-70°C. The consumption of the isocyanate residue in the reactant was confirmed by infrared absorption spectrum, and the reaction was terminated to obtain a hexafunctional urethane acrylate oligomer.

Furthermore, 2-(2-vinyloxyethoxy)ethyl acrylate (VEEA) was mixed with the urethane acrylate oligomer (urethane acrylate solution) at a ratio of urethane acrylate solution/VEEA = 90/10 (mass%).

Hollow silica (Thrulya 4320, JGC Catalysts and Chemicals Ltd.) was added to the resulting low refractive index coating (liquid component of resin material) and mixed at a ratio of hollow silica/resin material = 50/50 (mass%). In addition, 4 mass% of 1-hydroxy-cyclohexyl-phenyl-ketone (Omnirad-184 manufactured by IGM Resins B.V.) as a photoinitiator, 10 mass% of BYK-UV3500 (manufactured by BYK-Chemie) as a silicon-containing slip agent, and 10 mass% of RS-78 (manufactured by DIC Corporation) as a fluorine-containing leveling agent were added and dissolved. A solvent (propylene glycol monomethyl ether) was added, and the concentration was adjusted to a solid concentration of 3 mass%. The resulting low refractive index coating was designated as low refractive index coating C-1.

Low refractive index coating C-1 was applied to the hard coat layer of hard coat film B-1 described in Example 1 to give a dried coating film with a thickness of 100 nm and dried at 80°C for 2 minutes. Furthermore, the low refractive index coating was cured by irradiating it with UV light using a UV curing device so that the integrated light dose was 400 mJ/cm². Thus, a low refractive index layer with a thickness of 100 nm was formed on the outer surface of hard coat film B-1, thereby producing anti-reflection film D-1.

### [Example 6]

Anti-reflection film D-2 was produced in the same manner as in Example 5, except that hard coat film B-2 described in Example 2 was used.

The anti-reflection films of Examples 5 and 6 produced in this way were measured as follows.

### <Refractive index>

The refractive index value (nD) was measured at 20°C at the D-line, i.e., a wavelength of 589 nm, using an Abbe refractometer (model: NAR-3T) manufactured by Atago Co., Ltd.. For a solution containing a solvent, the refractive index was measured with the solvent still contained, and the refractive index value of the solution without the solvent was calculated from the measured value and the dilution ratio of the solvent. As a result, the refractive indices of the low refractive index layers in anti-reflection films D-1 and D-2 were 1.390 and 1.390, respectively.

### <Reflectance (luminous reflectance)>

Anti-reflection films were measured according to JIS Z 8701 using SD7000 manufactured by Nippon Denshoku Industries Co., Ltd. Measurement was performed after a black spray was applied and allowed to dry on the surface on the other side from the low refractive index layer to prevent reflection from the back side (base material layer side) of the film of each example. As a result, both anti-reflection films D-1 and D-2 had a reflectance of 1.7%, showing sufficient anti-reflective performance.

### <Cloth scratch resistance>

Four-ply medical gauze MediGauze (manufactured by Osaki Medical Corp.) was moved back and forth under a load of 100 g/cm² 100 times across the surface of the film of each example on the low refractive index layer side, and the presence of scratches was visually evaluated using the following criteria.
Good: No scratch
Poor: One or more scratches

As a result, it was confirmed that both anti-reflection films D-1 and D-2 did not have any scratches.

### <Anti-fingerprint property>

After dropping an artificial fingerprint liquid (oleic acid) on the surface of the sample, a silicon pad was used to thinly spread the artificial fingerprint liquid to a diameter of approximately 11 mm. The artificial fingerprint liquid was wiped over the sample using 3M Japan Scotch-Brite No. 5000 cloth under a load of 500 g. The above test was repeated until the fingerprint was wiped off. If the fingerprint was completely wiped off after up to five wipes, the sample was considered to have a good anti-fingerprint property, and if it took six or more wipes, the sample was considered to have a poor anti-fingerprint property.

As a result, the fingerprint could be wiped off after three wipes on both anti-reflection films D-1 and D-2, confirming good anti-fingerprint properties.

## Claims

1. A hard coat film comprising a base material layer containing a thermoplastic resin, and a hard coat layer, which is a cured coating film layer, on at least one side of the base material layer,
wherein, the hard coat layer comprises a fluorine-containing leveling agent, a surface roughness of a surface of the hard coat layer is 10 nm or less, an atomic concentration of fluorine F(80°) at an angle of 80° is 10 atomic% or less, and an atomic concentration of fluorine F(30°) at an angle of 30° is 10 atomic% or less, as measured by angle resolved XPS.

2. The hard coat film according to claim 1, wherein a contact angle of propylene glycol monomethyl ether on the surface of the hard coat layer is 10° or less.

3. The hard coat film according to claim 1 or 2, wherein the hard coat layer further comprises a photopolymerization initiator, a urethane (meth)acrylate, and solid inorganic particles.

4. The hard coat film according to any one of claims 1 to 3, wherein a pencil hardness of the surface of the hard coat layer is H or harder.

5. The hard coat film according to any one of claims 1 to 4, comprising a low refractive index layer, whose refractive index is lower than a refractive index of the hard coat layer by 0.05 or more, on the surface of the hard coat layer.

6. The hard coat film according to claim 5, wherein the low refractive index layer comprises a fluorine-containing leveling agent and a silicon-containing slip agent.

7. The hard coat film according to any one of claims 1 to 6, which is used for an insert molding application.

8. A resin molded article which is provided with the hard coat film according to any one of claims 1 to 7 on its surface.
